# EUROPÄISCHE PATENTSCHRIFT

(11) **EP 2 790 956 B1**
(45) Veröffentlichungstag und Bekanntmachung des Hinweises auf die Patenterteilung: **10.03.2021**
(21) Anmeldenummer: 12743088.2
(22) Anmeldetag: 01.08.2012
(51) Int. Cl.: H02J 7/02, B60L 53/14, B60L 53/24

(54) **KRAFTFAHRZEUG**
MOTOR VEHICLE
VÉHICULE À MOTEUR

(30) Priorität: 16.12.2011 DE 102011121486
(43) Veröffentlichungstag der Anmeldung: 22.10.2014
(73) Patentinhaber: Audi AG, 85045 Ingolstadt (DE)
(72) Erfinder: WINKLER, Josef, 85110 Kipfenberg (DE)
(74) Vertreter: Herbst, Matthias Heinz
(86) Internationale Anmeldenummer: PCT/EP2012/003267
(87) Internationale Veröffentlichungsnummer: WO 2013/087127

(56) Entgegenhaltungen:
- EP-A1- 0 603 778
- EP-A1- 1 657 106
- DE-A1-102009 000 096
- US-A- 3 670 238

## Beschreibung

Die Erfindung betrifft ein Kraftfahrzeug, umfassend wenigstens eine elektrische Maschine, welche unter Zwischenschaltung wenigstens eines Wechselrichters mit wenigstens einer wiederaufladbaren Energiespeichereinheit für elektrische Energie verbindbar oder verbunden ist, wobei die Energiespeichereinheit über ein kraftfahrzeugseitiges Ladeanschlusselement mit einer externen, elektrische Energie bereitstellenden Energieversorgungseinrichtung verbindbar ist.

Es ist bekannt, Kraftfahrzeuge vollkommen oder teilweise, das heißt neben konventionellen Verbrennungsmotoren, unterstützend über elektrische Maschinen bzw. Elektromotoren anzutreiben. Die für einen Betrieb der elektrischen Maschine erforderliche elektrische Energie wird üblicherweise von einer wiederaufladbaren Energiespeichereinheit im Sinne einer Batterie bereitgestellt.

Dabei wurde vorgeschlagen, separate, üblicherweise als Wechselrichter ausgebildete und zum Laden der wiederaufladbaren Energiespeichereinheit verwendete Ladegeräte zu entfernen und beim Laden der wiederaufladbaren Energiespeichereinheit auf die kraftfahrzeugseitige, grundsätzlich vorhandene Leistungselektronik, das heißt insbesondere auf zwischen die elektrische Maschine und eine entsprechende wiederaufladbare Energiespeichereinheit geschaltete Wechselrichter, zurückzugreifen. Mithin wird hier in kraftfahrzeugseitig Bordnetzen grundsätzlich vorhandene Wechselrichter in einer Doppelfunktion genutzt, das heißt diese stellen einerseits die für den Betrieb der elektrischen Maschine erforderliche Wechselspannung durch geeignete Umwandlung der der Energiespeichereinheit entnommenen Gleichspannung bereit, andererseits können die Wechselrichter direkt mit einer externen Energieversorgungseinrichtung, insbesondere einem Stromnetz, verbunden werden, wobei die Wechselrichter die energieversorgungseinrichtungsseitig bereitgestellte Spannung in eine für das Laden der kraftfahrzeugseitigen Energiespeichereinheit geeignete Spannung umwandeln.

Problematisch ist es, wenn seitens der externen Energieversorgungseinrichtung kein für den Betrieb entsprechender elektrischer Maschinen erforderlicher Dreiphasenwechselstrom bereitgestellt werden kann, das heißt etwa in Fällen, in denen energieversorgungseinrichtungsseitig nur ein ein- oder zweiphasiger Wechselstrom bereitstellbar ist. Hierfür wurden besondere Vorrichtungen vorgeschlagen, welche zur Erzeugung eines dreiphasigen Drehwechselstroms aus einem ein- oder zweiphasigen Wechselstrom ausgebildet sind. Indes sind entsprechende Vorrichtungen regelmäßig schaltungstechnisch komplex ausgebildet und umfassen eine Vielzahl an unterschiedlichen Bauteilen der Leistungselektronik.

Aus der Druckschrift EP 0 603 778 A1 ist ein elektrisches System für ein Elektrofahrzeug bekannt, welches Strom von einer externen Wechselstromquelle über die Wicklungen eines Wechselstrommotors an einen Stromwandler des Kraftfahrzeugs zuführt. Bei dem Stromwandler handelt es sich dabei um einen Dreiphasenwandler, welcher in einer Doppelfunktion genutzt wird, also einerseits die Gleichspannung der Batterie in Drehstrom umwandelt, um eine elektrische Maschine zu betreiben, und andererseits extern zugeführten Drehstrom in Gleichstrom umwandelt, um die Batterie zu laden.

Aus der Druckschrift US 3 670 238 A ist eine rotierende dynamoelektrische Maschine mit einem Rotor mit einer Zweitwicklung mit hohem Widerstand bekannt. Die Maschine umfasst einen im Wesentlichen ringförmigen Stator, der erste und zweite Wicklungen umfasst, die einen elektrischen Phasenabstand von 90° von einander aufweisen, wobei die Anzahl der zweiten Wicklungen ungefähr 0,845-mal so groß ist, wie die Anzahl der Wicklungen der ersten Wicklungen. Hierbei ist es möglich, eine einphasige Wechselspannung an der ersten Wicklung anzuschließen und die zweite Wicklung in Serie über einen Kondensator mit der gleichen Wechselspannung zu verbinden.

Der Erfindung liegt das Problem zugrunde, ein Kraftfahrzeug mit einer verbesserten Vorrichtung zur Erzeugung eines dreiphasigen Drehwechselstroms aus einem ein- oder zweiphasigen Wechselstrom anzugeben.

Das Problem wird erfindungsgemäß gelöst durch ein Kraftfahrzeug nach dem Anspruch 1, welches sich dadurch auszeichnet, dass das Ladeanschlusselement des Kraftfahrzeugs wenigstens eine Vorrichtung zur Erzeugung eines dreiphasigen Drehwechselstroms aus einem ein- oder zweiphasigen Wechselstrom aufweist, wobei die Vorrichtung wenigstens eine Schaltungsanordnung mit wenigstens einem parallel zu wenigstens einer Drehwechselstromwicklung geschalteten Kondensator umfasst, wobei die Verbindung der wenigstens einen elektrischen Maschine von dem kraftfahrzeugseitigen Antriebsstrang über wenigstens ein Trennmittel trennbar ist.

Die dem erfindungsgemäßen Kraftfahrzeug zugehörige wenigstens eine wiederaufladbare Energiespeichereinheit, welche auch als Batterie oder Traktionsbatterie zu bezeichnen ist, kann demnach auch über ein nur ein- oder zweiphasige Wechselspannung bzw. Wechselstrom bereitstellende externe Energieversorgungseinrichtungen (Stromnetze) geladen werden. Hierfür ist dem zum Verbinden des Kraftfahrzeugs mit der Energieversorgungseinrichtung vorgesehenen Ladeanschlusselement, welches üblicherweise über ein Ladekabel oder dergleichen mit der Energieversorgungseinrichtung verbindbar ist, eine Vorrichtung zur Erzeugung eines dreiphasigen Drehwechselstroms aus einem ein- oder zweiphasigen Wechselstrom zugehörig. Die Vorrichtung weist einen besonders einfachen Aufbau auf und umfasst wenigstens eine Schaltungsanordnung mit wenigstens einem parallel zu wenigstens einer Drehwechselstromwicklung geschalteten Kondensator bzw. ist als solche ausgebildet.

Die Schaltungsanordnung ist insbesondere als Steinmetzschaltung ausgebildet. Steinmetzschaltungen weisen üblicherweise einen parallel zu wenigstens einer Drehwechselstromwicklung geschalteten Kondensator auf. Mittels Steinmetzschaltungen ist es möglich, elektrische Komponenten, welche üblicherweise dreiphasige Drehwechselströme erfordern, ohne zusätzliche Beschaltung auch mit ein- oder zweiphasigen Wechselströmen zu betreiben. Bezogen auf das erfindungsgemäße Kraftfahrzeug ist die diesem zugehörige wiederaufladbare Energiespeichereinheit sonach auch über ein- oder zweiphasige Wechselströme zu laden. Dabei wandelt die dem Ladeanschlusselement zugehörige Steinmetzschaltung die ein- oder zweiphasigen Wechselströme (Drehwechselströme) in einen dreiphasigen Drehwechselstrom um, welcher dreiphasige Drehwechselstrom der Energiespeichereinheit über den, insbesondere dreiphasigen, Wechselrichter zugeführt wird.

Damit die elektrische Maschine respektive der Elektromotor des Kraftfahrzeugs bei Anlegen eines Ladestroms respektive einer Ladespannung an das Ladeanschlusselement kein Drehmoment oder sonstige Kräfte auf den diesem nachgeschalteten Antriebsstrang des Kraftfahrzeugs überträgt, ist vorteilhaft ein Trennmittel vorgesehen, über welches Trennmittel die Verbindung der wenigstens einen elektrischen Maschine von dem kraftfahrzeugseitigen Antriebsstrang trennbar ist. In einer nicht erfindungsgemäßen Alternative ist die Verbindung der wenigstens einen elektrischen Maschine von dem Wechselrichter über wenigstens ein Trennmittel trennbar.

Ein entsprechendes Trennmittel kann beispielsweise als wenigstens ein elektrisches Schaltmittel ausgebildet sein, wobei die elektrische Maschine über das wenigstens eine elektrische Schaltmittel von dem Wechselrichter trennbar ist. Vorzugsweise ist jede der drei Phasen der elektrischen Maschine über ein eigenes elektrisches Schaltmittel von dem Wechselrichter trennbar, das heißt die elektrische Verbindung jeder Phase der elektrischen Maschine mit dem Wechselrichter ist separat trennbar bzw. unterbrechbar. Die Ansteuerung der elektrischen Schaltmittel erfolgt insbesondere über eine geeignete kraftfahrzeugseitig vorgesehene Steuereinrichtung derart, dass während des Ladens der Energiespeichereinheit die elektrische Maschine über ein Öffnen der im Wesentlichen als Schalter dienenden elektrischen Schaltmittel vom Bordnetz getrennt ist. Die seitens der externen Energieversorgungseinrichtung bereitgestellte und die Vorrichtung durchlaufende Energie respektive der seitens der externen Energieversorgungseinrichtung bereitgestellte Strom und die Vorrichtung durchlaufende hat keine Möglichkeit, die elektrische Maschine in Bewegung zu setzen bzw. anzutreiben.

Vorteilhaft ist dem Ladeanschlusselement in der vorgenannten Ausführungsform wenigstens ein elektrisches Widerstandselement, insbesondere ein induktives Widerstandselement, nachgeschaltet. Das elektrische Widerstandselement dient der Einstellung einer geeigneten, auf das Bordnetz des Kraftfahrzeugs angepassten Spannung bzw. Stromstärke. Mithin ist der elektrische Widerstand des elektrischen Widerstandselements auf das Bordnetz des Kraftfahrzeugs angepasst. Zweckmäßig ist jeder von dem Ladeanschlusselement abgehenden Leitung wenigstens ein eigenes Widerstandselement zugeordnet, das heißt es ist vorteilhaft, in jede entsprechende Leitung ein geeignetes induktives Widerstandselement geschaltet.

Das oder ein weiteres Trennmittel kann insbesondere auch als Kupplung ausgebildet sein, wobei die elektrische Maschine über die Kupplung von dem Antriebsstrang des Kraftfahrzeugs trennbar ist. Die Kupplung ist der elektrischen Maschine derart nachgeschaltet, dass über ein Öffnen dieser während des Ladevorgangs der Energiespeichereinheit durch den hierbei üblichen Stromfluss und ein Drehen des Rotors, der hier nicht zwingend elektrisch vom Bordnetz des Kraftfahrzeugs getrennten elektrischen Maschine, bedingte Drehmomente nicht auf den weiteren Antriebsstrang, das heißt ein Getriebe und insbesondere die Antriebsachse bzw. Antriebsräder des Kraftfahrzeugs übertragen werden. Das Kraftfahrzeug läuft also nicht Gefahr, sich beim Laden der mit der externen Energieversorgungseinrichtung verbundenen Energiespeichereinheit zu bewegen bzw. anzufahren.

In vorteilhafter Weiterbildung der Erfindung ist es vorgesehen, dass das Ladeanschlusselement wenigstens ein elektrisches Schaltmittel aufweist, über welches das Ladeanschlusselement vom Bordnetz des Kraftfahrzeugs trennbar ist. Mithin kann das Ladeanschlusselement elektrisch vom Bordnetz des Kraftfahrzeugs getrennt werden, so dass an diesem keine Spannung anliegt und so die Gefahr von Verletzungen eines Bedieners oder Beschädigungen weiterer Bauteile unterbunden ist. Hierbei genügt regelmäßig ein zentraler Sicherheitsschalter, so dass die Trennung des Ladeanschlusselements vom Bordnetz des Kraftfahrzeugs ohne größeren schaltungstechnischen Aufwand realisierbar ist. Die Ansteuerung des oder der entsprechenden elektrischen Schaltmittel erfolgt insbesondere über eine den Ladevorgang der Energiespeichereinheit steuernde Steuereinrichtung.

Das erfindungsgemäße Kraftfahrzeug kann als reines Elektrokraftfahrzeug oder als Hybridkraftfahrzeug ausgebildet sein. Die erste Alternative sieht demnach ein vollkommen ohne Verbrennungsmotor ausgebildetes Kraftfahrzeug, die zweite Alternative ein sowohl einen Verbrennungsmotor als auch eine zumindest teil- bzw. zeitweise als Antriebsaggregat dienende elektrische Maschine, das heißt einen Elektromotor aufweisendes Kraftfahrzeug, vor. Insbesondere kann das Hybridkraftfahrzeug auch als sogenanntes Plug-in-Hybridkraftfahrzeug ausgebildet sein, welches sich von üblichen Hybridkraftfahrzeugen dadurch unterscheidet, dass die der elektrischen Maschine zugeordnete wiederaufladbare Energiespeichereinheit über eine externe Energieversorgungseinrichtung ladbar ist.

Daneben betrifft die Erfindung ein Verfahren zum Laden eines Kraftfahrzeugs nach dem Anspruch 6, insbesondere des Kraftfahrzeugs wie vorstehend beschrieben. Das Kraftfahrzeug weist wenigstens eine elektrische Maschine, welche unter Zwischenschaltung wenigstens eines Wechselrichters mit wenigstens einer kraftfahrzeugseitigen wiederaufladbaren Energiespeichereinheit für elektrische Energie verbindbar oder verbunden ist, auf, wobei die Energiespeichereinheit zum Laden über ein kraftfahrzeugseitiges Ladeanschlusselement mit einer externen elektrische Energie bereitstellenden Energieversorgungseinrichtung verbunden wird, wobei das Ladeanschlusselement wenigstens eine Vorrichtung zur Erzeugung eines dreiphasigen Drehwechselstroms aus einem ein- oder zweiphasigen Wechselstrom aufweist und die Energiespeichereinheit mit einem ein- oder zweiphasigen Wechselstrom geladen wird. Die verwendete Vorrichtung zeichnet sich dadurch aus, dass sie wenigstens eine Schaltungsanordnung mit wenigstens einem parallel zu wenigstens einer Drehwechselstromwicklung geschalteten Kondensator umfasst. Die Verbindung der wenigstens einen elektrischen Maschine von dem kraftfahrzeugseitigen Antriebsstrang wird über wenigstens ein Trennmittel getrennt. Die Schaltungsanordnung ist insbesondere als Steinmetzschaltung ausgebildet. Grundsätzlich gelten zum erfindungsgemäßen Verfahren sämtliche Ausführungen zum erfindungsgemäßen Kraftfahrzeug analog.

In einer vorteilhaften Ausführungsform des erfindungsgemäßen Verfahrens ist es vorgesehen, dass die elektrische Maschine vor Beginn des Ladevorgangs der Energiespeichereinheit auf eine vorgebbare oder vorgegebene Mindestdrehzahl gebracht wird, wobei das Laden der Energiespeichereinheit erst beginnt, wenn die elektrische Maschine die vorgebbare oder vorgegebene Mindestdrehzahl erreicht hat. Derart ist eine Reduzierung des Einschaltstroms bei Ladebeginn möglich. Sofern die im Wesentlichen von der Leistung bzw. vom Typ der elektrischen Maschine abhängige Mindestdrehzahl erreicht ist, wird der Motorbetrieb der elektrischen Maschine abgeschaltet und der eigentliche Ladebetrieb der Energiespeichereinheit vollzogen. Die zum Antrieb der elektrischen Maschine auf die erforderliche Mindestdrehzahl erforderliche Energiemenge wird insbesondere über die im Weiteren zu ladende Energiespeichereinheit bereitgestellt, so dass von einer Komplettentladung der Energiespeichereinheit in dieser erfindungsgemäßen Ausführungsform abzusehen ist.

Weitere Vorteile der Erfindung ergeben sich aus den im Folgenden beschriebenen Ausführungsbeispielen sowie anhand der Zeichnungen. Dabei zeigen:
- Fig. 1, 2 und 4: jeweils Prinzipdarstellungen eines Kraftfahrzeugs in beispielhaften Ausführungsformen der Erfindung;
- Fig. 3: ein Kraftfahrzeug; und
- Fig. 5: eine schematische Darstellung des Aufbaus einer Steinmetzschaltung.

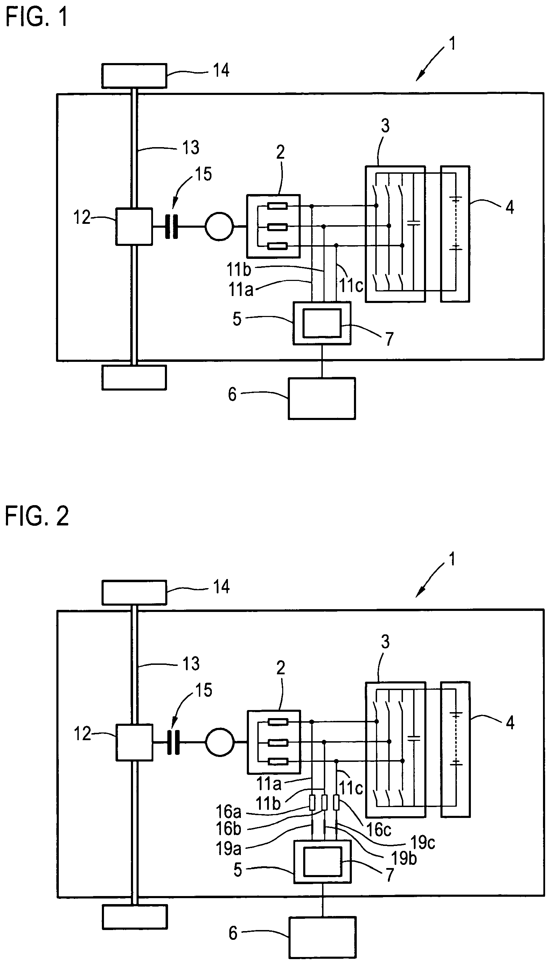

Fig. 1 zeigt eine Prinzipdarstellung eines Kraftfahrzeugs 1 in einer beispielhaften Ausführungsform der Erfindung. Das Kraftfahrzeug 1 ist als reines Elektrokraftfahrzeug ausgebildet und wird über eine als Antriebsaggregat dienende elektrische Maschine respektive einen dreiphasigen Elektromotor 2 angetrieben. Der Elektromotor 2 ist unter Zwischenschaltung eines dreiphasigen Wechselrichters 3 mit einer wiederaufladbaren, auch als Batterie bzw. Traktionsbatterie zu bezeichnenden Energiespeichereinheit 4 verbunden. Der Wechselrichter 3 weist übliche, hier nicht näher bezeichnete Komponenten der Leistungselektronik auf, das heißt er umfasst insbesondere drei parallele Zweige mit jeweils zwei in Serie geschalteten elektrischen Schaltelementen. Zu den drei Zweigen ist insbesondere ein ebenso nicht näher bezeichneter Kondensator parallel geschaltet.

Die Energiespeichereinheit 4 ist über ein kraftfahrzeugseitiges Ladeanschlusselement 5 mit einer externen, elektrische Energie bereitstellenden Energieversorgungseinrichtung 6, das heißt einem Stromnetz, verbindbar bzw. in Fig. 1 verbunden. Die Verbindung erfolgt über ein oder mehrere Ladekabel oder dergleichen. Mithin dient der Wechselrichter 3 samt dem Ladeanschlusselement 5 als Ladegerät der Energiespeichereinheit 4, so dass zusätzliche Ladegeräte nicht zwingend erforderlich sind, wodurch sich beispielsweise Gewicht und Kosten des Kraftfahrzeugs 1 einsparen lassen.

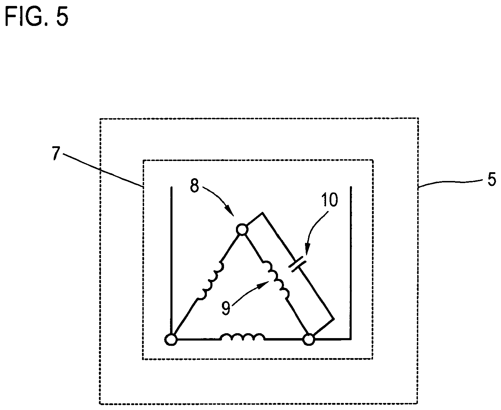

Das Ladeanschlusselement 5 weist eine Vorrichtung 7 zur Erzeugung eines dreiphasigen Drehwechselstroms aus einem ein- oder zweiphasigen Wechselstrom (Drehwechselstrom) auf. Die Vorrichtung 7 umfasst eine als Steinmetzschaltung ausgebildete Schaltungsanordnung 8, welche in der eine schematische Darstellung des Aufbaus einer Steinmetzschaltung zeigenden Fig. 5 näher dargestellt ist. Wie dort ersichtlich ist, umfasst die Vorrichtung 7 sonach die Schaltungsanordnung 8, welche einen parallel zu wenigstens einer Drehwechselstromwicklung 9 geschalteten Kondensator 10 aufweist.

Mithin ist es möglich, die Energiespeichereinheit 4 auch über eine nur ein- oder zweiphasigen Wechselstrom bereitstellende Energieversorgungseinrichtung 6 zu laden, da die Vorrichtung 7, das heißt die als Steinmetzschaltung ausgebildete Schaltungsanordnung 8 eine Umwandlung des ein- oder zweiphasigen Wechselstroms in den für den Betrieb des Elektromotors 2 erforderlichen dreiphasigen Drehwechselstrom vornimmt. Von dem Ladeanschlusselement 5 gehen drei für die drei unterschiedlichen Phasen des Drehwechselstroms vorgesehene Leitungen 11a - 11c ab und werden mit entsprechenden Anschlüssen des dreiphasigen Wechselrichters 3 verbunden.

Ersichtlich ist das Ladeanschlusselement 5 über entsprechende elektrische Schaltmittel 19a - 19c von den Leitungen 11a - 11c trennbar, so dass das Ladeanschlusselement 5 nur im Rahmen von Ladevorgängen der Energiespeichereinheit 4, das heißt bei Anschluss an eine Energieversorgungseinrichtung 6 von Strom durchflossen werden kann. In allen anderen Situationen liegt keine Spannung an dem Ladeanschlusselement 5 an, so dass die Gefahr von Verletzungen respektive Beschädigungen anderer Bauteile reduziert bzw. unterbunden ist. Die Schaltmittel 19a - 19c können auch in einem gemeinsamen zentralen Schaltelement zusammengefasst sein.

Die Verbindung des Elektromotors 2 mit dem diesem nachgeschalteten kraftfahrzeugseitigen Antriebsstrang, das heißt insbesondere dem Getriebe 12 sowie den Antriebsachsen 13 bzw. Antriebsrädern 14 ist über ein Trennmittel in Form einer, insbesondere mechanischen, Kupplung 15 trennbar. Mithin kann der Elektromotor 2 während des Ladens der Energiespeichereinheit 4 vom Antriebsstrang des Kraftfahrzeugs 1 mechanisch entkoppelt werden, so dass die während des Ladens der Energiespeichereinheit 4 in den Elektromotor 2 induzierten, Rotationsbewegungen des dem Elektromotor 2 zugehörigen Rotors und somit die Erzeugung eines Drehmoments bildenden Ströme kein Anfahren des Kraftfahrzeugs 1 bedingen.

Fig. 2 zeigt eine Prinzipdarstellung eines erfindungsgemäßen Kraftfahrzeugs 1 gemäß einer weiteren beispielhaften Ausführungsform. Der wesentliche Unterschied zu dem in Fig. 1 gezeigten Kraftfahrzeug 1 besteht darin, dass in die von dem Ladeanschlusselement 5 abgehenden Leitungen 11a - 11c elektrische Widerstandselemente in Form von induktiven Widerständen 16a - 16c geschaltet sind. Die induktiven Widerstände 16a - 16c sind insbesondere an die Spannung des Bordnetzes des Kraftfahrzeugs 1 angepasst.

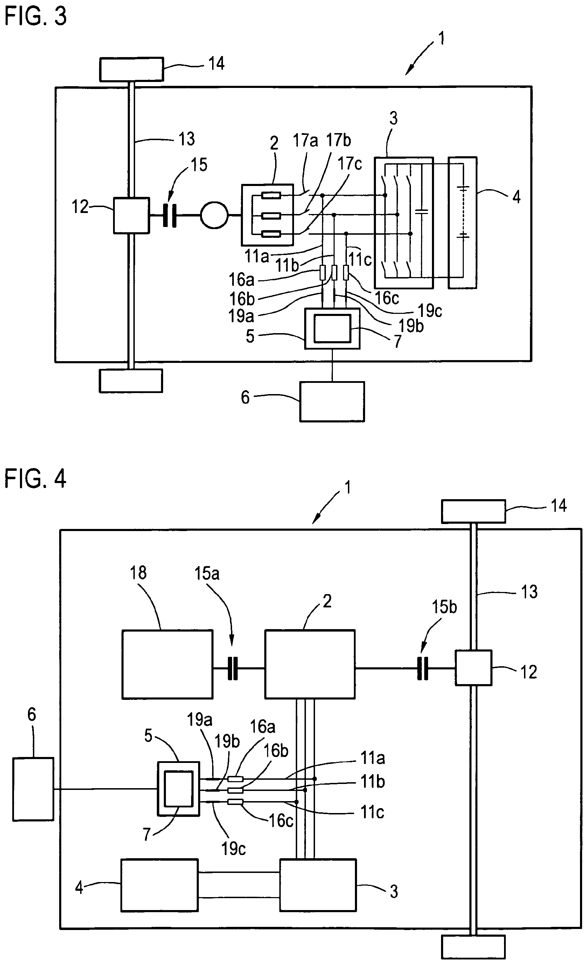

Fig. 3 zeigt eine Prinzipdarstellung eines Kraftfahrzeugs 1 in einer weiteren beispielhaften Ausführungsform. Der wesentliche Unterschied zu den in den Fig. 1, 2 gezeigten Ausführungsformen besteht darin, dass das Trennmittel hier nicht als Kupplung 15, sondern als elektrisches Schaltmittel 17a - 17c ausgebildet ist. Ersichtlich ist durch die Zwischenschaltung entsprechender elektrischer Schaltmittel 17a - 17c in die elektrische Verbindung zwischen dem Elektromotor 2 und dem Wechselrichter 3, der Elektromotor 2 elektrisch von dem Wechselrichter 3 respektive von der Energiespeichereinheit 4 sowie gegebenenfalls dem weiteren Bordnetz des Kraftfahrzeugs 1 trennbar. Über eine geeignete Ansteuerung, das heißt ein Öffnen der elektrischen Schaltmittel 17a - 17c während des Ladens der Energiespeichereinheit 4, kann verhindert werden, dass während des Ladens der Energiespeichereinheit 4 Ströme in den Elektromotor 2 induziert und so ein Anfahren des Kraftfahrzeugs 1 bedingt wird.

Die elektrischen Schaltmittel 17a - 17c sind über eine geeignete, insbesondere den Ladevorgang der Energiespeichereinheit 4 überwachende Steuereinrichtung (nicht gezeigt) ansteuerbar. Gleichermaßen sind auch in Fig. 3, wie bereits in Fig. 2 gezeigt, entsprechende Widerstandselemente in Form von induktiven Widerständen 16a - 16c in die von dem Ladeanschlusselement 5 abgehenden Leitungen 11a - 11c geschaltet. Bei der in Fig. 3 gezeigten Ausführungsform ist sonach eine, insbesondere mechanische, Kupplung, 15, wie in den Fig. 1, 2 gezeigt, nicht zwingend erforderlich.

Fig. 4 zeigt eine Prinzipdarstellung eines Kraftfahrzeugs 1 in einer weiteren beispielhaften Ausführungsform der Erfindung. Im Gegensatz zu den in den Fig. 1 - 3 gezeigten Ausführungsformen handelt es sich hierbei nicht um ein reines Elektrokraftfahrzeug, sondern um ein Hybridkraftfahrzeug in Form eines sogenannten Plug-in-Hybridkraftfahrzeugs. Das Kraftfahrzeug 1 weist sonach neben dem Elektromotor 2 auch einen Verbrennungsmotor 18 auf. Ersichtlich ist der Elektromotor 2 über eine Kupplung 15a von dem Verbrennungsmotor 18 trennbar. Gleichermaßen ist der Elektromotor 2 über eine Kupplung 15b von dem Getriebe 12 des Kraftfahrzeugs 1 trennbar. Die Kupplungen 15a, 15b sind bei Plug-in-Hybridkraftfahrzeugen grundsätzlich vorgesehen, so dass insbesondere die Kupplung 15b, das heißt die zwischen dem Elektromotor 2 und dem Getriebe 12 angeordnete Kupplung, im Sinne eines erfindungsgemäßen Trennmittels verwendet werden kann. Das heißt, dass während des Ladens der dem Elektromotor 2 zugeordneten Energiespeichereinheit 4 eine mechanische Entkopplung des Elektromotors 2 sowohl von dem Getriebe 12 als auch dem Verbrennungsmotor 18 möglich ist, so dass während des Ladens der Energiespeichereinheit 4 in den Elektromotor 2 induzierte, zu Rotationsbewegungen des dem Elektromotor 2 zugehörigen Rotors führende Ströme kein Anfahren des Kraftfahrzeugs 1 bedingen können.

Unabhängig von den konkreten, in den Fig. 1, 2 und 4 gezeigten Ausführungsformen erfindungsgemäßer Kraftfahrzeuge 1, ist es im Rahmen des Ladens eines erfindungsgemäßen Kraftfahrzeugs 1 vorteilhaft möglich, dass vor Beginn des Ladevorgangs der Energiespeichereinheit 4 der Elektromotor 2 auf eine vorgebbare oder vorgegebene Mindestdrehzahl gebracht wird, wobei das Laden der Energiespeichereinheit 4 erst beginnt, wenn der Elektromotor 2 die vorgebbare oder vorgegebene Mindestdrehzahl erreicht hat. Derart ist es möglich, Einschaltströme bei Beginn des Ladevorgangs der Energiespeichereinheit 4 zu reduzieren. Sobald der Elektromotor 2 die vorgebbare bzw. vorgegebene Mindestdrehzahl erreicht hat, kann der Motorbetrieb abgeschaltet und der Ladevorgang der Energiespeichereinheit 4 begonnen werden.

Die zum Antrieb des Elektromotors 2 erforderliche Energiemenge, das heißt die Energiemenge, die erforderlich ist, um den Elektromotor 2 auf die vorgebbare oder vorgegebene Mindestdrehzahl zu bringen, kann beispielsweise über die in der Energiespeichereinheit 4 noch befindliche Restenergiemenge bereitgestellt werden. Im Beispiel des in Fig. 4 gezeigten Plug-in-Hybridkraftfahrzeugs, kann der Antrieb des Elektromotors 2 auf die vorgebbare oder vorgegebene Mindestdrehzahl selbstverständlich auch wenigstens teilweise über den Verbrennungsmotor 18 erfolgen.

## Patentansprüche

1. Kraftfahrzeug (1), umfassend wenigstens eine elektrische Maschine (2), welche unter Zwischenschaltung wenigstens eines Wechselrichters (3) mit wenigstens einer wiederaufladbaren Energiespeichereinheit (4) für elektrische Energie verbindbar oder verbunden ist, wobei die Energiespeichereinheit (4) über ein kraftfahrzeugseitiges Ladeanschlusselement (5) mit einer externen, elektrische Energie bereitstellenden Energieversorgungseinrichtung (6) verbindbar ist,
**dadurch gekennzeichnet,**
**dass** das Ladeanschlusselement (5) wenigstens eine Vorrichtung (7) zur Erzeugung eines dreiphasigen Drehwechselstroms aus einem ein- oder zweiphasigen Wechselstrom aufweist, wobei die Vorrichtung (7) wenigstens eine Schaltungsanordnung (8) mit wenigstens einem parallel zu wenigstens einer Drehwechselstromwicklung (9) geschalteten Kondensator (10) umfasst, wobei die Verbindung der wenigstens einen elektrischen Maschine (2) von dem kraftfahrzeugseitigen Antriebsstrang über wenigstens ein Trennmittel trennbar ist.

2. Kraftfahrzeug nach Anspruch 1,
**dadurch gekennzeichnet,**
**dass** die Schaltungsanordnung (8) als Steinmetzschaltung ausgebildet ist.

3. Kraftfahrzeug nach Anspruch 1 oder 2,
**dadurch gekennzeichnet,**
**dass** das Trennmittel als Kupplung (15, 15a, 15b) ausgebildet ist, wobei die elektrische Maschine (2) über die Kupplung (15, 15a, 15b) von dem Antriebsstrang des Kraftfahrzeugs (1) trennbar ist.

4. Kraftfahrzeug nach einem der vorangehenden Ansprüche,
**dadurch gekennzeichnet,**
**dass** das Ladeanschlusselement (5) wenigstens ein elektrisches Schaltmittel (19a - 19c) aufweist, über welches das Ladeanschlusselement (5) vom Bordnetz des Kraftfahrzeugs (1) trennbar ist.

5. Kraftfahrzeug nach einem der vorangehenden Ansprüche,
**dadurch gekennzeichnet,**
**dass** es als reines Elektrokraftfahrzeug oder als Hybridkraftfahrzeug ausgebildet ist.

6. Verfahren zum Laden eines Kraftfahrzeugs (1), insbesondere des Kraftfahrzeugs (1) nach einem der vorangehenden Ansprüche, welches Kraftfahrzeug (1) wenigstens eine elektrische Maschine (2), welche unter Zwischenschaltung wenigstens eines Wechselrichters (3) mit wenigstens einer kraftfahrzeugseitigen wiederaufladbaren Energiespeichereinheit (4) für elektrische Energie verbindbar oder verbunden ist, aufweist, wobei die Energiespeichereinheit (4) zum Laden über ein kraftfahrzeugseitiges Ladeanschlusselement (5) mit einer externen elektrische Energie bereitstellenden Energieversorgungseinrichtung (6) verbunden wird,
**dadurch gekennzeichnet,**
**dass** das Ladeanschlusselement (5) wenigstens eine Vorrichtung (7) zur Erzeugung eines dreiphasigen Drehwechselstroms aus einem ein- oder zweiphasigen Wechselstrom aufweist und die Energiespeichereinheit (4) mit einem ein- oder zweiphasigen Wechselstrom geladen wird, wobei eine wenigstens eine Schaltungsanordnung (8) mit wenigstens einem parallel zu wenigstens einer Drehwechselstromwicklung (9) geschalteten Kondensator (10) umfassende Vorrichtung (7) verwendet wird, und wobei die Verbindung der wenigstens einen elektrischen Maschine (2) von dem kraftfahrzeugseitigen Antriebsstrang über wenigstens ein Trennmittel getrennt wird.

7. Verfahren nach Anspruch 6,
**dadurch gekennzeichnet,**
**dass** vor Beginn des Ladevorgangs der Energiespeichereinheit (4) die elektrische Maschine (2) auf eine vorgebbare oder vorgegebene Mindestdrehzahl gebracht wird, wobei das Laden der Energiespeichereinheit (4) beginnt, wenn die elektrische Maschine (2) die vorgebbare oder vorgegebene Mindestdrehzahl erreicht hat.

## Claims

1. Motor vehicle (1), comprising at least one electric machine (2), which can be connected or is connected to at least one rechargeable energy storage unit (4) for electrical energy with intermediate connection of at least one power inverter (3), wherein the energy storage unit (4) can be connected via a motor vehicle-side charge connection element (5) to an external energy supply device (6), which supplies electrical energy, **characterised in that** the charge connection element (5) has at least one device (7) for generating a three-phase current from a single-phase or two-phase alternating current, wherein the device (7) comprises at least one circuit arrangement (8) with at least one capacitor (10), which is connected in parallel with at least one three-phase current winding (9), wherein the connection of the at least one electric machine (2) is separable from the motor vehicle-side drive train by means of at least one separating device.

2. Motor vehicle according to claim 1, **characterised in that** the circuit arrangement (8) is configured as a Steinmetz circuit.

3. Motor vehicle according to claim 1 or 2, **characterised in that** the separating device is configured as a coupling (15, 15a, 15b), wherein the electric machine (2) is separable from the drive train of the motor vehicle (1) via the coupling (15, 15a, 15b).

4. Motor vehicle according to any of the preceding claims, **characterised in that** the charge connection element (5) has at least one electric switching device (19a - 19c), via which the charge connection element (5) is separable from the on-board electrical system of the motor vehicle (1).

5. Motor vehicle according to any of the preceding claims, **characterised in that** it is configured as an entirely electric motor vehicle or as a hybrid motor vehicle.

6. Method for charging a motor vehicle (1), in particular the motor vehicle (1) according to any of the preceding claims, which motor vehicle (1) has at least one electric machine (2), which can be connected or is connected to at least one motor vehicle-side rechargeable energy storage unit (4) for electrical energy with intermediate connection of at least one power inverter (3), wherein the energy storage unit (4) is connected for charging via a motor vehicle-side charge connection element (5) to an external energy supply device (6), which supplies electrical energy, **characterised in that** the charge connection element (5) has at least one device (7) for generating a three-phase current from a single-phase or two-phase alternating current and the energy storage unit (4) is charged with a single-phase or two-phase alternating current, wherein a device (7) comprising at least one circuit arrangement (8) with at least one capacitor (10), which is connected in parallel with at least one three-phase current winding (9), is used, and wherein the connection of the at least one electric machine (2) is separated from the motor vehicle-side drive train by means of at least one separating device.

7. Method according to claim 6, **characterised in that** prior to commencing charging of the energy storage unit (4), the electric machine (2) is brought to a minimum rotational speed that is or can be predetermined, wherein charging of the energy storage unit (4) commences when the electric machine (2) has reached the minimum rotational speed that is or can be predetermined.

## Revendications

1. Véhicule à moteur (1), comprenant au moins un moteur électrique (2), lequel peut être connecté ou est connecté, avec interposition d'au moins un onduleur (3), à au moins une unité d'accumulateur d'énergie rechargeable (4) pour l'énergie électrique, dans lequel l'unité d'accumulateur d'énergie (4) peut être connectée à un dispositif externe d'alimentation en énergie (6) fournissant de l'énergie électrique via un élément de borne de recharge (5) du côté du véhicule à moteur,
**caractérisé en ce que**
l'élément de borne de recharge (5) présente au moins un dispositif (7) pour la production d'un courant alternatif triphasé à partir d'un courant alternatif monophasé ou biphasé, dans lequel le dispositif (7) comprend au moins un agencement de circuit (8) avec au moins un condensateur (10) commuté en parallèle par rapport à au moins un enroulement de courant alternatif triphasé (9), dans lequel la connexion de l'au moins un moteur électrique (2) peut être séparée de la chaîne cinématique du côté du véhicule à moteur via au moins un moyen de séparation.

2. Véhicule à moteur selon la revendication 1,
**caractérisé en ce que**
l'agencement de circuit (8) est réalisé en tant que circuit Steinmetz.

3. Véhicule à moteur selon la revendication 1 ou 2,
**caractérisé en ce que**
le moyen de séparation est réalisé en tant qu'embrayage (15, 15a, 15b), dans lequel le moteur électrique (2) peut être séparé de la chaîne cinématique du véhicule à moteur (1) via l'embrayage (15, 15a, 15b).

4. Véhicule à moteur selon l'une quelconque des revendications précédentes,
**caractérisé en ce que**
l'élément de borne de recharge (5) présente au moins un moyen de commutation électrique (19a - 19c) par lequel l'élément de borne de recharge (5) peut être séparé du réseau de bord du véhicule à moteur (1).

5. Véhicule à moteur selon l'une quelconque des revendications précédentes,
**caractérisé en ce qu'**
il est réalisé comme un véhicule à moteur purement électrique ou comme un véhicule à moteur hybride

6. Procédé pour charger un véhicule à moteur (1), en particulier le véhicule à moteur (1) selon l'une quelconque des revendications précédentes, lequel véhicule à moteur (1) présente au moins un moteur électrique (2), lequel peut être connecté ou est connecté, avec interposition d'au moins un onduleur (3), à au moins une unité d'accumulateur d'énergie rechargeable (4) pour l'énergie électrique du côté du véhicule à moteur, dans lequel l'unité d'accumulateur d'énergie (4) est connectée pour la charge, via un élément de borne de recharge (5) du côté du véhicule à moteur, à un dispositif d'alimentation en énergie (6) externe fournissant de l'énergie électrique,
**caractérisé en ce que**
l'élément de borne de recharge (5) présente au moins un dispositif (7) pour la production d'un courant alternatif triphasé à partir d'un courant alternatif monophasé ou biphasé et l'unité d'accumulateur d'énergie (4) est rechargée à l'aide d'un courant alternatif monophasé ou biphasé, dans lequel un dispositif (7) comprenant au moins un agencement de circuit (8) avec au moins un condensateur (10) commuté en parallèle par rapport à au moins un enroulement de courant alternatif triphasé (9) est utilisé, et dans lequel la connexion de l'au moins un moteur électrique (2) est séparée de la chaîne cinématique du côté du véhicule à moteur via au moins un moyen de séparation.

7. Procédé selon la revendication 6,
**caractérisé en ce que**,
avant le commencement de l'opération de recharge de l'unité d'accumulateur d'énergie (4), le moteur électrique (2) est amené à une vitesse de rotation minimale pouvant être prédéterminée ou prédéfinie, dans lequel la charge de l'unité d'accumulateur d'énergie (4) commence lorsque le moteur électrique (2) a atteint la vitesse de rotation minimale pouvant être prédéterminée ou prédéfinie.
